Europäisches Patentamt

European Patent Office

Office européen des brevets

(19)

(11) Veröffentlichungsnummer : **0 131 136**
**B1**

(12) **EUROPÄISCHE PATENTSCHRIFT**

(45) Veröffentlichungstag der Patentschrift :
09.09.87

(21) Anmeldenummer : 84106280.5

(22) Anmeldetag : 01.06.84

(51) Int. Cl.⁴ : **B 23 B 51/10**

(54) Kegelsenker.

(30) Priorität : 10.06.83 DE 3321110

(43) Veröffentlichungstag der Anmeldung :
16.01.85 Patentblatt 85/03

(45) Bekanntmachung des Hinweises auf die Patenterteilung : 09.09.87 Patentblatt 87/37

(84) Benannte Vertragsstaaten :
AT BE CH DE FR GB IT LI LU NL SE

(56) Entgegenhaltungen :
CH-A- 597 960
DE-U- 7 441 332
GB-A- 1 324 960
US-A- 1 377 495
US-A- 2 187 221
US-A- 4 293 254

(73) Patentinhaber : Heule, Heinrich
Kristallstrasse 6
CH-9434 Au (CH)

(72) Erfinder : Heule, Heinrich
Kristallstrasse 6
CH-9434 Au (CH)

(74) Vertreter : Riebling, Günter, Dr. et al
Patentanwälte Dr.-Ing., Dipl.-Ing., Ing.(grad) Günter
Riebling Dr.-Ing., Dipl.-Ing. Peter Riebling Rennerle 10
Postfach 3160
D-8990 Lindau (Bodensee) (DE)

## Beschreibung

Die Erfindung betrifft einen Kegelsenker nach dem Oberbegriff des Patentanspruchs 1.

Bei einem derartigen bekannten Kegelsenker nach der US-PS-4 293 254 liegen die Schneidmesser oder Schneidplatten mit der Breitseite an Anschlagflächen an und werden mit ihren längsseitigen Stirnseiten zusätzlich noch in Nuten des Senkerkopfs geführt. Nachteilig hierbei ist es, daß die Nuten trotz relativ großen Aufwands nicht mit der erforderlichen großen Präzisision in den Senkerkopf eingebracht werden können. Die Schneidmesser sind deshalb in Bezug auf ihre Schneidkanten zum Teil versetzt, wodurch ein ratterfreier Lauf nicht gewährleistet war. Außerdem können auftretende Wärmespannungen ein Verziehen der Schneidmesser in den Nuten auslösen. Wegen der festen Einspannung der Schneidmesser in den Nuten konnten sich dann auftretende Verformungen nach dem Abkühlen nicht mehr reversibel zurückbilden. Als Folge mußten bei dem bekannten Kegelsenker Ungenauigkeiten in Bezug auf die Ausrichtung der Schneidmesser hingenommen werden.

Die Erfindung hat sich die Aufgabe gestellt, einen Kegelsenker der eingangs genannten Art so weiterzubilden, daß bei kostengünstiger Ausführung die Schneidmesser bei großer Entgratleistung mit hoher Präzisision am Kopf des Kegelsenkers geführt werden können. Außerdem sollen die Schneidmesser leicht auswechselbar sein, um ein Nachschärfen zu ermöglichen.

Die Lösung der Aufgabe gelingt mit den kennzeichnenden Merkmalen des Anspruchs 1.

Die Schneidmesser oder Schneidplatten liegen demnach bei der Erfindung mit ihren Breitseiten an Auflageflächen auf und liegen mit ihren innenliegenden und den werkstückfernen Stirnseiten an Anschlagflächen an. Diese jeweiligen Auflage- bzw. Anschlagflächen können relativ kostengünstig mit hoher Präzision gearbeitet werden, so daß demgegenüber auch die Schneidplatten in der Ausrichtung eine hohe Präzisision aufweisen. Die Schneidplatten können leicht ausgewechselt und nachgeschärft werden, da Nuten, in denen sich die Schneidplatten verspannen könnten, vermieden werden. Da die Schneidplatten jeweils nur an entsprechenden Flächen anliegen, können sich evtl. auftretende Verformungen in Form von Wärmespannungen nach dem Abkünlen leicht wieder reversibel zurückbilden.

Es ergibt sich damit ein grat- und ratterfreies Arbeiten im Handbis CNC-Einsatz und ein großer Senkbereich.

Weitere bevorzugte Merkmale der Erfindung sind Gegenstand der übrigen Unteransprüche.

Im folgenden wird die Erfindung anhand von lediglich einen Ausführungsweg darstellende Zeichnungen näher erläutert. Hierbei gehen aus den Zeichnungen und der Beschreibung weitere bevorzugte Merkmale und Vorteile der Erfindung hervor.

Es zeigen :
Figur 1 Seitenansicht mit teilweisem Schnitt durch einen Kegelsenker nach der Erfindung ;
Figur 2 Stirnansicht des Kegelsenkers nach Figur 1.

Der konische Grundkörper 1 geht in einen zylindrischen Körper 2 über, auf den ein Anschlagring 3 aufgesetzt ist. Der Anschlagring 3 ist mit Hilfe eines Gewindestiftes 4 mit einem Körper 2 verbunden. Der Gewindestift 4 weist einen konischen Anzug von 30° auf, damit eine spielfreie Befestigung des Anschlagringes 3 auf den Körper 2 möglich ist. Der zylindrische Körper 2 ist werkstoffeinstückig mit einem Senkerkopf 5 verbunden, ebenso wie der Körper 2 werkstoffeinstückig mit dem Grundkörper 1 verbunden ist.

Grundkörper 1, Körper 2 und Senkerkopf 5 sind also ein einziges, durchgehendes Teil. Der Senkerkopf 5 weist einen zylindrischen Ansatz 6 auf, der in einen Senkkonus 7 (Senkwinkel 90°) übergeht. Der Senkerkopf 5 mit seinem Senkkonus 7 bildet um jeweils 120° am Umfang versetzte Aufnahmen 8, 9, 10 aus, an deren seitliche Anschlagflächen 11, 12, 13 die Schneidplatten 14, 15, 16 mit Hilfe von Spannschrauben 17, 18, 19 befestigt sind. Die Schneidplatten weisen ein inneres Anschlagteil 20 auf, welches dreiecksförmig profiliert und werkstoffeinstückig mit dem Werkzeugkörper 5 ausgebildet ist.

Ferner liegen die Messer an unteren Anschlagflächen 21 des Senkerkopfes 5 an.

Die Spannschrauben 17, 18, 19 weisen ebenfalls einen konischen Anzug auf, so daß die Schneidplatten 14, 15, 16 kraftschlüssig und formschlüssig sowohl gegen die radial außenliegenden Anschlagflächen 42 des Anschlagteils 20, als auch gegen die Anschlagflächen 11, 12, 13, sowie gegen die Anschlagflächen 21 gedrückt werden. Hierdurch ergibt sich ein absolut spielfreier und rutschfreier Sitz der Schneidplatten 14 am Senkerkopf 5. Die Anschlagfläche 21 wird hierbei durch den Anschlagring 3 gebildet, der mit Hilfe des Gewindestiftes 4 mit dem Körper 2 verbunden ist.

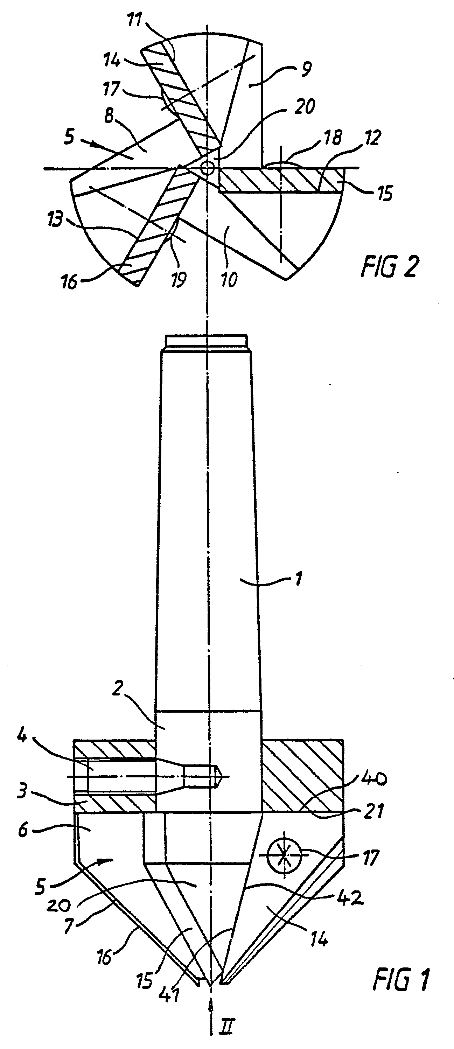

Figur 2 zeigt, daß die Schneidplatten 14, 15, 16 in entsprechenden Aufnahmen 8, 9, 10 jeweils um 120° versetzt am Umfang des Kegelsenkers angeordnet sind. Das Anschlagteil 20 nach Figur 2 ist dreiecksförmig ausgebildet und verläuft nach Figur 1 von der Spitze des Kegelsenkers bis zur Stirnseite des Rings 3.

Ferner ist es vorteilhaft, wenn die hintere, an dem Anschlagteil 20 anliegende Fläche 42 der Schneidplatte 14 einen Winkel von 15° zur Horizontalen aufweist. Hierdurch wird eine verbesserte Kraftübertragung des Zerspanungsdrucks auf den Senkerkopf 5 gewährleistet.

## Patentansprüche

1. Kegelsenker zum Anbringen konischer Ansenkungen an Bohrungsrändern, bestehend aus einem Grundkörper (1) und einem kegeligen Senkerkopf (5), an dem mit Befestigungsbohrungen versehene auswechselbare Schneidplatten (1A) mit Schrauben (17) angebracht sind, die entsprechend der Außenkontur des Senkerkopfes in Vorschubrichtung schräg gestellte Schneidkanten aufweisen, dadurch gekennzeichnet, daß fluchtend mit der Längsmittellinie des Kegelsenkers durch den Senkerkopf (5) ein Anschlagteil (20) vorgesehen ist, welches radial außenliegende Anschlagflächen (42) für die Schneidplatten aufweist, an denen die Schneidplatten (14) mit ihren radial innenliegenden Stirnseiten (41) anliegen, und daß die Schneidplatten (14) zusätzlich mit ihren werkstücksfernen Stirnseiten (40) gegen Anschlagflächen (21) eines am Grundkörper (1) befestigten Ringes (3) anliegen, und in dieser in zwei Schubrichtungen festgelegten Position jeweils mittels einer Spannschraube (17) auf den Auflageflächen (21, 42) des Rings und des Senkerkopfes (5) befestigt sind.

2. Kegelsenker nach Anspruch 1, dadurch gekennzeichnet, daß der Senkerkopf (5) drei jeweils um 120° versetzt am Umfang angeordnete Schneidmesser-Aufnahmen (8, 9, 10) aufweist und das Anschlagteil (20) dreieckförmig profiliert ist.

3. Kegelsenker nach Anspruch 1, dadurch gekennzeichnet, daß die Anlagefläche der Schneidplatte (14, 15, 16) an der zugeordneten Anschlagfläche des Anschlagteils (20) im Winkel von 15° in Richtung zur Mittenlängsachse geneigt ist.

**Claims**

1. Chamfering tool to cut a conical chamfer in the rim of a bore hole, consisting of a main body (1) and a conical chamfering head (5) on which are affixed by screws (17) in through-extending holes replaceable cutting plates (14), which are provided corresponding to the outer contour of the chamfering head with cutting edges inclined in feed direction, characterized in that in alignment with the longitudinal axis of the chamfering tool through the chamfering head (5) a fastening member (20) is arranged which has radially outward facing surfaces (42), on which the cutting plates (14) with their radially inner facing surfaces (41) are positioned, and that additionally the cutting plates (14) with their workpiece-far facing surfaces (41) abut against bearing surfaces (21) of a ring (3) secured to the main body (1), and are fastened in this in two thrust directions fixed position on the bearing surfaces (21) of the ring (3) and the chamfering head (5) by means of a tightening bolt (17).

2. Chamfering tool according to Claim 1, characterized in that the chamfering head (5) is provided with three cutting plate receptacles (8, 9, 10) mutually angularly spaced around the circumference by 120°, and that the fastening member (20) is having a triangular profile.

3. Chamfering tool according to Claim 1, characterized in that the bearing surface of the cutting plates (14, 15, 16) is inclined on the corresponding bearing surface of the fastening member (20) at an angle of 15° in direction of the longitudinal axis.

**Revendications**

1. Aléseuse à tête conique permettant de réaliser des évasements coniques sur les bords d'un alésage, et comprenant un corps principal (1) et une tête d'alésage de forme conique (5) sur laquelle sont montées, à l'aide de vis (17), des plaquettes de coupe interchangeables (14) munies de trous de fixation et présentant des arêtes de coupe positionnées en biais, par rapport à la direction d'avance, conformément au contour extérieur de la tête d'alésage, caractérisée en ce qu'il est prévu un élément formant butée (20) qui s'étend à travers la tête d'alésage (5), en alignement avec l'axe longitudinal médian de l'aléseuse et qui présente des surfaces de butée (42), orientées radialement vers l'extérieur, pour les plaquettes de coupe, surfaces de butée contre lesquelles les plaquettes de coupe (14) s'appliquent par leur face frontale (41) tournée radialement vers l'intérieur, et en ce que les plaquettes de coupe (14) s'appliquent en plus, par leur face frontale (40) la plus éloignée de la pièce à usiner, contre des surfaces de butée (21) ménagées sur un anneau (3) fixé au corps principal (1) et sont, dans cette position immobilisée dans deux directions de poussée, fixées chacune sur les surfaces de butée (21, 42) de l'anneau et de la tête d'alésage (5), au moyen d'une vis de blocage respective (17).

2. Aléseuse à tête conique selon la revendication 1, caractérisée en ce que la tête d'alésage (5) comporte trois logements (8, 9, 10) de lame de coupe, qui sont mutuellement décalés de 120° sur son pourtour, et l'élément formant butée (20) est profilé sous une forme triangulaire.

3. Aléseuse à tête conique selon la revendication 1, caractérisé en ce que la surface d'appui de la plaquette de coupe (14, 15, 16), en contact avec la surface de butée associée de l'élément formant butée (20), est inclinée, selon un angle de 15°, par rapport à l'axe longitudinal médian.

0 131 136

FIG 2

FIG 1